# NEUE EUROPÄISCHE PATENTSCHRIFT

(11) **EP 0 224 144 B2**
(45) Veröffentlichungstag und Bekanntmachung des Hinweises auf die Entscheidung über den Einspruch: **12.05.1993**
(45) Hinweis auf die Patenterteilung: 26.07.1989
(21) Anmeldenummer: 86115814.5
(22) Anmeldetag: 14.11.1986
(51) Int. Cl.: B60K 17/356

(54) **Kraftfahrzeug mit Hauptantriebsachse und zuschaltbarer Antriebsachse**
Motor vehicle with a main drive axle and an additional drive axle
Véhicule comprenant un essieu moteur principal et un essieu moteur additionnel

(30) Priorität: 28.11.1985 DE 3542059
(43) Veröffentlichungstag der Anmeldung: 03.06.1987
(73) Patentinhaber: Adam Opel Aktiengesellschaft, 65428 Rüsselsheim (DE)
(72) Erfinder: Bausch, Paul, Ing., D-6229 Hattenheim (DE); Indra, Friedrich, Dr. Ing., D-6144 Zwingenberg (DE)
(74) Vertreter: Bergerin, Ralf, Dipl.-Ing.

(56) Entgegenhaltungen:
- DE-A- 2 929 497
- DE-A- 2 943 554
- DE-C- 631 145
- DE-C- 1 159 279
- FR-A- 2 461 610
- FR-A- 2 541 202
- US-A- 2 244 216
- US-A- 3 057 427
- US-A- 4 236 595
- US-A- 4 318 449
- US-A- 4 405 029

## Beschreibung

Die Erfindung betrifft ein Kraftfahrzeug nach dem Oberbegriff des Patentanspruchs 1.

Ein derartiges Kraftfahrzeug mit einem Hauptantrieb auf die Vorderachse und einem manuell oder schlupfabhängig automatisch zuschaltbaren Zusatzantrieb auf die Hinterachse ist aus der FR-A2 461 610 bekannt. Für den Zusatzantrieb, der nur in einem niedrigen Geschwindigkeitsbereich wirksam wird, kommen Elektromotoren oder Hydraulikmotoren zum Einsatz.

Aus der DE-A 29 29 497, die der FR-A 2 461 610 entspricht, ist ein Fahrzeug mit einem manuell und/oder automatisch zuschaltbaren Zusatzantrieb bekannt. Der Zusatzantrieb umfaßt dabei einen Elektromotor, der über eine Freilaufkupplung auf die normalerweise frei mitlaufenden Hinterräder einwirkt.

Wird bei diesem bekannten Fahrzeug der Elektromotor des Zusatzantriebs eingeschaltet, so schließt die Freilaufkupplung sofort und bewirkt ein Antriebsmoment auf das entsprechende Hinterrad, solange dieses langsamer läuft als die entsprechende vom Elektromotor angetriebene Achse. Sobald das hilfweise angetriebene Rad schneller läuft als die Achse, kann es diese überlaufen, wodurch die Freilaufkupplung geöffnet wird.

Um beim Abschalten des Elektromotors ein Öffnen der Freilaufkupplung zu unterstützen, wird dieser kurzfristig entgegen seiner bisherigen Drehrichtung beaufschlagt.

Ein manueller Schalter ermöglicht die Zuschaltung des Hilfsantriebs durch den Fahrer. Dabei ist es möglich, den Elektromotor für begrenzte Zeit direkt zu betreiben, ohne daß der Fahrzeugmotor eingeschaltet zu werden braucht.

Aus der US-A4 236 595 und der DE-C 2 921 756 sind Nutzfahrzeuge mit einem Hauptantrieb und schlupfabhängig zuschaltbaren Zusatzantriebsaggregaten bekannt.

Bei einem aus der DE-C 723 666 bekannten Kraftfahrzeug ist im Hauptantriebsstrang zwischen einem Verbrennungsmotor und einer Hauptantriebsachse eine elektrische Kupplung angeordnet, welche bei Schlupf als Generator geschaltet wird und Strom zum Antrieb eines elektrischen Motors erzeugt, der seinerseits eine Nebenantriebsachse treibt. Ein ähnliches Kraftfahrzeug ist der US-A 3 057 427 zu entnehmen.

Aus der DE-A 2 623 138 ist es bekannt, in einen von einem mechanischen Hauptantriebsstrang abzweigenden mechanischen Zusatzantriebsstrang eine Viskosekupplung anzuordnen welche nur bei auftretenden Drehzahlunterschieden zwischen den Antriebssträngen mehr oder weniger stark geschlossen wird. Auf diese Weise läßt sich zwar erreichen, daß die Räder des Zusatzantriebsstranges nur bei schlechter Traktion der Räder des Hauptantriebsstranges zum Vortrieb des Fahrzeuges beitragen, so daß auch die Seitenführungskräfte der Räder des Zusatzantriebsstranges im Regelfalle nicht durch den Zusatzantrieb vermindert werden können. Jedoch besitzen solche Fahrzeuge in konstruktiver Hinsicht prinzipiell gleiche Nachteile wie Fahrzeuge mit permanentem Allradantrieb. Für den zusätzlichen Antriebsstrang wird nämlich relativ viel Raum benötigt. Im Falle eines Personenkraftwagens bedeutet dies in der Regel, daß ein vergrößerter Tunnel für die Antriebsstränge bzw. ein zusätzliches Verteilergetriebe und/oder die Viskosekupplung innerhalb des Fahrgastraumes angeordnet werden muß. Im übrigen führt der zusätzliche Antriebsstrang zu einem erheblichen Mehrgewicht. Außerdem sind in der Regel zusätzliche Maßnahmen zur Isolation von Geräuschen und Schwingungen notwendig. Wird ein herkömmliches Kraftfahrzeug nachträglich im Sinne eines derartigen Antriebes modifiziert, führt dies in praktisch allen Fällen zu einer Reduzierung der Bodenfreiheit. Schließlich kann auch ein erhöhter Lenkkraftaufwand notwendig sein.

Aus der DE-C 3 127 605 ist ein Kraftfahrzeug mit einem vom Hauptantriebsstrang abgeleiteten zuschaltbaren Vierradantrieb bekannt, der sich durch Betätigung des Handbremshebels zu- und abschalten läßt.

In der GB-A 2 151 565 sowie der US-A 3 458 005 werden Kraftfahrzeuge dargestellt, die jeweils zumindest eine vom Fahrzeugmotor mechanisch antreibbare Achse sowie ein oder mehrere Achsen mit Hydroantrieb besitzen.

Dabei ist nach der GB-A 2 151 565 vorgesehen, daß auch an der mechanisch antreibbaren Hauptantriebsachse parallel zum mechanischen Antriebsstrang ein Hydroantrieb angeordnet ist. Bei normalen Fahrsituationen sind sowohl der mechanische Antriebsstrang als auch der dazu parallele hydraulische Antriebsstrang eingeschaltet, wobei der hydraulische Antriebsstrang einen veränderbaren Anteil der Gesamtantriebsleistung überträgt.

Bei besonderen Fahrsituationen werden der mechanische Antriebsstrang unterbrochen und sämtliche hydraulischen Antriebsstränge an Haupt- und Zusatzantriebsachsen eingeschaltet.

Nach der US-A 3 458 005 ist vorgesehen, daß die Hauptantriebsachse eines Kraftfahrzeuges über einen mechanischen Antriebsstrang und eine weitere Antriebsachse mittels Hydromotoren antreibbar ist. Dabei wird die weitere Antriebsachse automatisch abgekoppelt, wenn die Fahrzeuggeschwindigkeit einen Schwellwert überschreitet oder wenn die Kupplung im Hauptantriebsstrang geöffnet bzw. das Getriebe auf Leerlauf geschaltet wird.

Die US-A 244 216 beschreibt ein Kraftfahrzeug mit einem Hauptantrieb durch einen Verbrennungsmotor wahlweise auf die Vorderachse, Hinterachse oder beide Achsen, und mit einem als Beschleunigungshilfe zuschaltbaren Elektromotor.

Die DE-C 631 145 beschreibt ein Kraftfahrzeug mit einem Heckmotor und davon angetriebenen Vorderrädern, und mit einem zuschaltbaren Hilfsantrieb, bei dem Elektromotoren auf die Hinterräder arbeiten. Die Zuschaltung des Hilfsantriebs geht mit dem Schaltwechsel eines Schaltgetriebes einher.

Der FR-A 2 541 202 ist ein Nachrüstsatz zu entnehmen, mit dem ein normalerweise zweiradgetriebenes Fahrzeug bei Bedarf zu einem dann permanent vierradgetriebenen Fahrzeug umgerüstet werden kann. Als Zusatzantriebsaggregat vorgesehene Hydraulikmotoren arbeiten über einen Kettentrieb auf die normalerweise nicht angetriebenen Räder.

In der DE-C 1 159 279 ist ein Kraftfahrzeug mit hydraulischem Zusatzantrieb auf seine normalerweise nicht angetriebenen Hinterräder beschrieben, bei dem Hydraulikmotoren synchron laufend an die Hinterräder angekuppelt werden.

Die US-A4405 029 beschreibt ein Kraftfahrzeug mit einem Verbrennungsmotor und einem Elektromotor, die gleiche oder auch verschiedene Achsen des Kraftfahrzeugs alternativ oder gleichzeitig antreiben. Der Elektromotor soll im "stop-and-go"-Betrieb zum Einsatz kommen. Ein schlupfabhängig zuschaltender Vierradantrieb ist nicht vorgesehen.

Die US-A4 318 449 beschreibt einen elektrischen Antrieb eines Kraftfahrzeugs mit einem oder mehreren, den beiden Achsen oder vier Rädern zugeord neten Elektromotoren. Letztere werden aus einer Batterie gespeist, die mittels eines verbrennungsmotorgetriebenen Ladesystems geladen wird.

Die WO-A8 503 042 betrifft lediglich eine besondere Art der Anordnung von Gelenkwellen an Mehrachsfahrzeugen mit Einzelradantrieben. Dabei sollen auch bei beengten Raumverhältnissen noch relativ lange Gelenkwellen ermöglicht werden.

Aufgabe der Erfindung ist es nun, ein Kraftfahrzeug zu schaffen, welches zumindest beim Betrieb auf Straßen die Vorzüge eines Allrad getriebenen Fahrzeuges ohne dessen Nachteile aufweist und einen umweltfreundlichen "Stop-and-Go"-Betrieb ermöglicht, wobei zur Erhöhung der Lebensdauer des schaltbaren Zusatzantriebs keine Drehzahlunterschiede zwischen dem Zusatzantrieb und dem bzw. den damit anzutreibenden Rädern auftreten sollen.

Diese Aufgabe wird durch das im Patentanspruch 1 gekennzeichnete Kraftfahrzeug gelöst.

Die Erfindung geht von der Erkenntnis bzw. dem allgemeinen Gedanken aus, daß - zumindest beim Einsatz des Fahrzeuges auf Straßen - ein Allradantrieb gegenüber einem herkömmlichen Antrieb nur in wenigen Fahrsituationen echte Vorteile bringt. Entsprechende Situationen treten praktisch nur auf rutschigem Untergrund, insbesondere im Winter bei Glatteis, auf. In derartigen Fällen bewirkt die elektronische Steuereinheit automatisch ein Wirksamwerden des Zusatzantriebs.

Dabei ist es für das Fahr- und Bremsverhalten des Kraftfahrzeugs von besonderem Vorteil, daß beim Bremsen und im Lehrlauf des Fahrzeugmotors insbesondere die vom Zusatzantriebsaggregat beaufschlagten Räder von diesem getrennt sind, so daß sich der Zusatzantrieb hierbei nicht störend auswirken kann. Außerdem wird durch die erfindungsgemäße Anpassung der Drehzahl des Zusatzantriebsaggregats an die Drehgeschwindigkeit der Räder erreicht, daß diese nicht plötzlich einem unverhältnismäßig großem Antriebsmoment ausgesetzt werden, so daß sie insbesondere auf glatten Fahrbahnen die Fahrbahnhaftung und damit auch ihre Seitenführungseigenschaften verlieren.

Da der Zusatzantrieb bei Straßeneinsatz des Fahrzeugs nur in Fahrsituationen wirksam wird, die nur mit relativ geringer Fahrgeschwindigkeit sicher beherrscht werden können, ist für die angetriebenen Räder lediglich eine verminderte Leistung bzw. ein vermindertes Antriebsmoment erforderlich. Das Zusatzantriebsaggregat braucht also nur eine relativ geringe Leistung aufzuweisen, so daß als Zusatzantriebsaggregat Elektro- und Hydromotoren eingesetzt werden können, die eine hohe Leistungsdichte aufweisen und eine außerordentlich raumsparende und vom zusätzlichen Gewicht her leichte Bauweise ermöglichen. Damit erübrigt sich ein gesonderter mechanischer Antriebsstrang zwischen der Zusatzantriebsachse und dem Fahrzeugmotor.

Im übrigen wird bezüglich bevorzugter Merkmale der Erfindung auf die Ansprüche sowie die nachfolgende Beschreibung bevorzugter Ausführungsbeispiele anhand der Zeichnung verwiesen. Dabei zeigt
Fig. 1 eine schematische Darstellung eines als Fahrzeug mit Frontantrieb konzipierten Basisfahrzeuges, welches erfindungsgemäß mit einem Zusatzantriebsaggregat für die Hinterachse ausgerüstet ist, wobei als derartiges Aggregat ein Elektromotor angeordnet ist,
Fig. 2 eine der Fig. 1 entsprechende Ausführungsform, jedoch mit zwei Elektromotoren, die jeweils einem Rad der Hinterachse zugeordnet sind,
Fig. 3 eine weitere abgewandelte Ausführungsform, bei der zwei Elektromotoren als Radnabenmotoren für den Zusatzantrieb an der Hinterachse angeordnet sind,
Fig. 4 eine der Fig. 1 entsprechende Ausführungsform, jedoch mit einem Hydromotor und
Fig. 5 bis 11 verschiedene Varianten einer Zusatzantriebsachse mit erfindungsgemäß angeordnetem Zusatzantriebsaggregat in schematischer Darstellung.

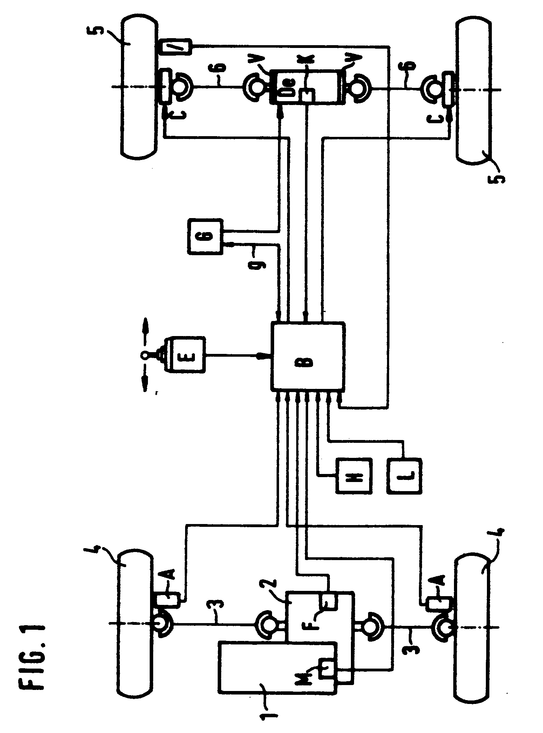

Bei dem Fahrzeug nach Fig.1 treibt der Fahrzeugmotor 1 in bekannter Weise über ein herkömmliches Getriebe 2 die mit den Getriebeausgängen über Gelenkwellen 3 verbundenen Vorderräder 4. Dementsprechend stellt die Vorderachse die Hauptantriebsachse des Fahrzeuges dar.

Die Räder 5 der als Zusatzantriebsachse angeordneten Hinterachse können über Gelenkwellen 6 mittels eines als Zusatzantriebsaggregat angeordneten Elektromotors De angetrieben werden. Dabei sind zwischen den Gelenkwellen 6 und dem Elektromotor De jeweils Viskosekupplungen V und antriebsmäßig zwischen den Rädern 5 und den Gelenkwellen 6 jeweils in der Radnabe untergebrachte elektromagnetische Zahnkupplungen C angeordnet.

Als Stromquelle für den als Gleichstrommotor ausgebildeten Elektromotor De dient die Batterie G, welche in nicht dargestellter Weise mittels eines vom Fahrzeugmotor 1 angetriebenen Generators geladen werden kann.

Die Steuerung des Elektromotors De erfolgt mittels einer elektronischen Steuereinheit B, welche eingangsseitig mit den Vorderrädern 4 zugeordneten Schlupf- und Drehrichtungssensoren A, einem dem Fahrzeugmotor 1 zugeordneten Zündimpulsgeber M, einem dem Getriebe 2 zugeordneten Leerlaufschalter F, einem manuell betätigten Fahrbetriebsschalter E, einem den Hinterrädern 5 zugeordneten Geschwindigkeitssensor I, einem dem Elektromotor De zugeordneten Drehzahlsensor K sowie einer den Ladezustand der Batterie G wiedergebenden Meßeinrichtung g verbunden ist.

Das dargestellte System arbeitet prinzipiell wie folgt:

Die Schlupf- und Drehrichtungssensoren A erzeugen die Drehrichtung der Vorderräder4 sowie deren Schlupf wiedergebende Signale. Sobald der Schlupf einen Schwellwert, welcher gegebenenfalls kennfeldabhängig entsprechend unterschiedlichen Fahrzuständen vorgegeben werden kann, überschreitet, schaltet die Steuereinheit B den Elektromotor De bei noch geöffnet bleibenden Zahnkupplungen C ein und synchronisiert die Drehzahl des Elektromotors De durch Vergleich der Signale von Geschwindigkeitssensor 1 und Drehzahlsensor K auf die wahre Radgeschwindigkeit der Hinter- bzw. Zusatzantriebsache. Sobald die Synchrondrehzahl erreicht ist, werden die Zahnkupplungen C geschlossen. Nunmehr gibt der Elektromotor De über die Viskosekupplungen V an die Hinterräder 5 ein Drehmoment ab, dessen Größe gegebenenfalls von der Steuereinheit B verändert werden kann.

Der Handbremsschalter L und der Bremspedalschalter H bewirken durch die von ihnen bei Betätigung der jeweiligen Bremse abgegebenen Signale, daß die Steuereinheit B die Zahnkupplungen C öffnet und gegebenenfalls gleichzeitig den Elektromotor De abschaltet. In entsprechender Weise werden die Zahnkupplungen C sowie der Elektromotor De betätigt, wenn der Leerlaufschalter F Leerlaufbetrieb des Getriebes 2, der Zündimpulsgeber M einen Stillstand des Motors 1 und/oder der Geschwindigkeitssensor I eine einen Schwellwert, beispielsweise 40 km/h, übersteigende Fahrgeschwindigkeit signalisieren.

Der Fahrbetriebsschalter E kann als Steuerung für "stop-and-go"-Betrieb benutzt werden, bei dem das Fahrzeug lediglich mit dem Zusatzantrieb, d.h. mit dem Elektromotor De, bewegt wird, während der Fahrzeugmotor 1 ausgekuppelt und gegebenenfalls stillgesetzt ist. Auf diese Weise läßt sich das Fahrzeug insbesondere bei Verkehrsstauungen in besonders zweckmäßiger Weise, insbesondere ohne Abgasentwicklung, bewegen. Bei diesem stop-and-go - Betrieb wird eine andernfalls mögliche Tiefentladung der Batterie G verhindert, da der Ladezustand der Batterie über die Meßeinrichtung g von derSteuereinheit B registriert wird und gegebenenfalls der Fahrzeugmotor 1 zum Nachladen der Batterie G gestartet werden kann.

Durch entsprechende Betätigung des Fahrhebels E ist darüber hinaus auch eine Rückwärtsfahrt möglich, wobei vor Umschalten auf Rückwärtsfahrt zweckmäßigerweise durch entsprechende Sicherungsvorrichtungen (nicht dargestellt) gewährleistet ist, daß das Fahrzeug zuerst zum Stillstand kommen muß.

Sowohl beim stop-and-go-Betrieb als auch beim normalen Fahrbetrieb kann der Elektromotor De gegebenenfalls zum Abbremsen des Fahrzeuges als Generator geschaltet werden, welcher die beim Bremsen zurückgewonnene Energie der Batterie G zuführt. Wenn dieser Generatorbetrieb beim normalen Fahrbetrieb verwendet wird, so wird der zunächst von den Hinterrädern 5 aufgrund der normalerweise offenen Zahnkupplungen C abgekuppelte Elektromotor De zunächst mit der Drehgeschwindigkeit der Hinterräder 5 synchronisiert, sodann werden die Zahnkupplungen C geschlossen und auf Generatorbetrieb mit in der Regel konstantem Bremsmoment geschaltet.

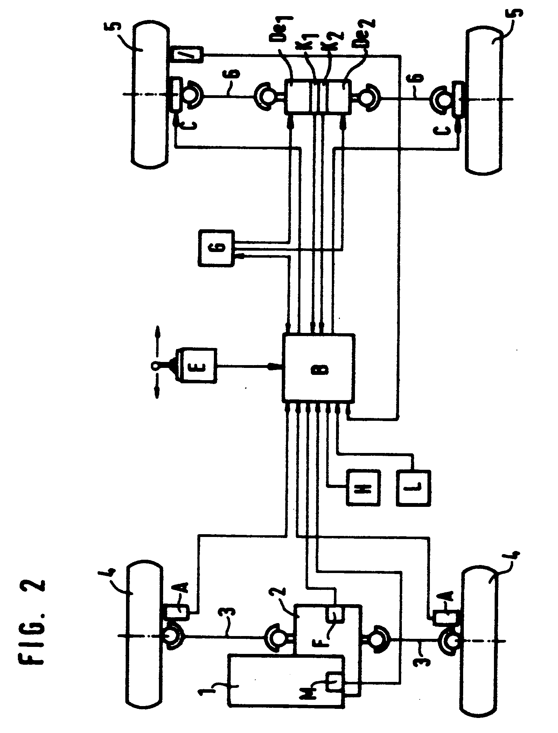

Die Ausführungsform nach Fig. 2 unterscheidet sich von derjenigen nach Fig. 1 im wesentlichen nur dadurch, daß als Zusatzantriebsaggregat zwei gesonderte Elektromotoren De₁ und De2 angeordnet sind, deren Ausgänge jeweils direkt, d.h. ohne Zwischenschaltung einer Viskosekupplung,mit einer der Gelenkwellen 6 verbunden ist. Im übrigen ist jedem der Elektromotoren De₁ und De2 ein gesonderter Drehzahlsensor K₁ bzw. K₂ zugeordnet. Bei dieser Ausführungsform besteht also keine mechanische Kopplung zwischen den Hinterrädern 5, so daß trotz der fehlenden Viskosekupplungen keinerlei Verspannungen zwischen den Rädern 5 zu befürchten sind.

Die Arbeitsweise der in Fig. 2 dargestellten Ausführungsform entspricht praktisch vollständig der Ausführungsform nach Fig. 1, im Unterschied dazu werden die Elektromotoren De₁ und De2 lediglich separat, entsprechend dem jeweils zugeordneten Hinterrad 5 beim Einschalten des Zusatzantriebes synchronisiert. Mit dieser getrennt geregelten Synchronisation wird gleichzeitig die Funktion eines Differentiales zwischen den Hinterrädern 5 übernommen.

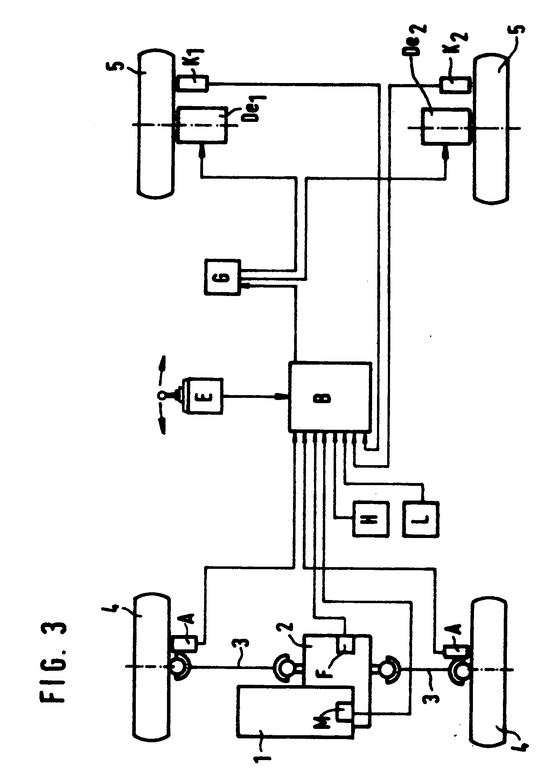

Die Ausführungsform nach Fig. 3 unterscheidet sich von derjenigen nach Fig. 2 im wesentlichen dadurch, daß die beiden Elektromotoren De₁ und De2 als Radnabenmotoren angeordnet und direkt,ohne zwischengeschaltete Zahnkupplung C,mit dem jeweiligen Hinterrad 5 antriebsmäßig verbunden sind. Da somit die Drehzahl der Elektromotoren De₁ und De2 in umkehrbar eindeutiger Weise der Drehzahl der jeweiligen Hinterräder 5 entspricht, registrieren die jedem Elektromotor zugeordneten Drehzahlsensoren K₁ und K₂ gleichzeitig die Raddrehzahl bzw. Fahrgeschwindigkeit. Außerdem erübrigt sich beim Einschalten des Zusatzantriebes eine Synchronisation der Elektromotoren De₁ und De2 mit den Radrehzahlen, es braucht lediglich das von den Elektromotoren jeweils erzeugte Drehmoment durch Veränderung der zugeführten Spannung verändert zu werden.

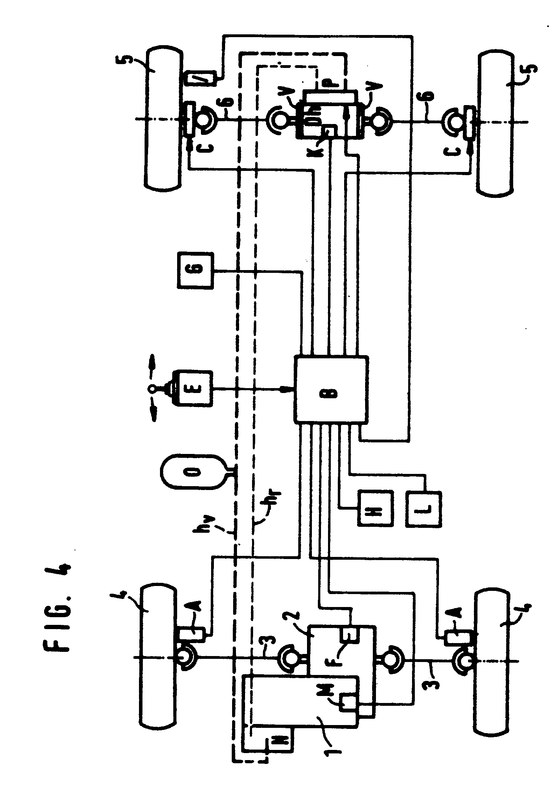

Die Ausführungsform nach Fig. 4 unterscheidet sich von derjenigen nach Fig. 1 im wesentlichen dadurch, daß als Zusatzantrieb anstelle eines Elektromotors De ein Hydromotor Dh angeordnet ist, welcher über eine Vorlaufleitung hᵥ, vorzugsweise mit darin angeordnetem Druckvorratsbehälter O, sowie eine Rücklaufleitung hᵣ mit der Druck- sowie Saugseite einer vom Fahrzeugmotor 1 angetriebenen Hydropumpe N hydraulisch verbunden ist. Zur Veränderung von Drehzahl und/oder Drehmoment des Hydraulikmotors Dh dient ein von der Steuereinheit B gesteuertes bzw. geregeltes elektromagnetisches Steuerventil P, welches den Zu-und/oder Abfluß des hydraulischen Mediums zum bzw. vom Hydromotor Dh beeinflußt. Die Funktionsweise entspricht praktisch vollständig der Ausführungsform nach Fig. 1, lediglich mit dem Unterschied, daß der Fahrzeugmotor 1 auch bei stop-and-go-Betrieb zum Antrieb der Hydropumpe N laufen muß.

In den weiteren Figuren sind vorteilhafte Möglichkeiten der Anordnung bzw. Ausbildung der Zusatzantriebsaggregate dargestellt. Dabei kann jedoch anstelle des bzw. der jeweils dargestellten Elektromotore De auch ein Hydromotor in grundsätzlich entsprechender Weise angeordnet sein.

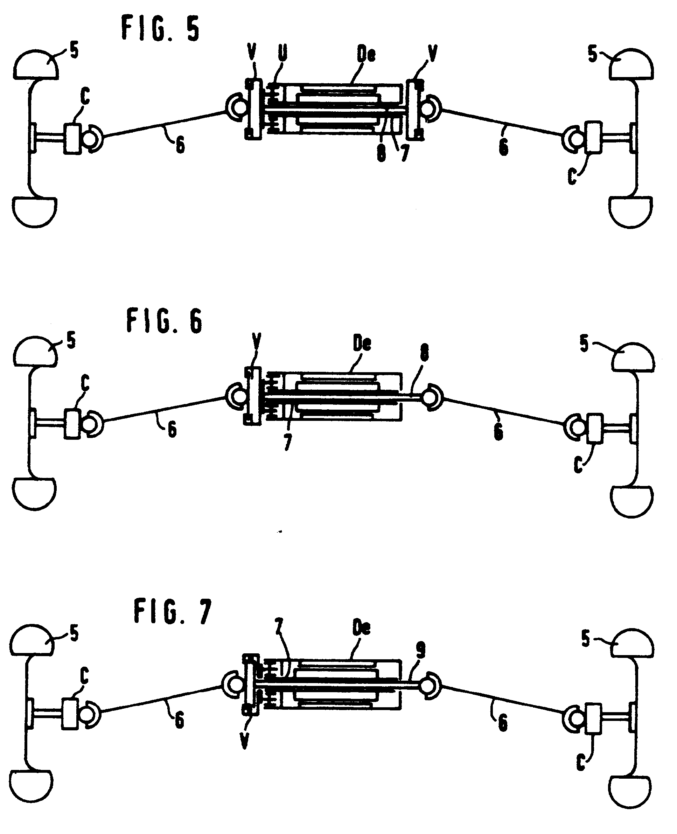

Nach Fig. 5 besitzt der parallel zur Fahrzeugquerachse angeordnete Elektromotor De einen Rotor, welcher auf einer Hohlwelle 7 angeordnet ist, die ihrerseits drehfest mit dem Sonnenrad eines Planetengetriebes U verbunden ist, dessen Hohlradkranz drehfest zum Gehäuse des Elektromotors De angeordnet ist. Die zwischen Hohlradkranz und Sonnenrad umlaufenden Planetenräder sind in üblicher Weise an einem Planetenträger gelagert, welcher seinerseits drehfest mit der die Hohlwelle 7 koaxial durchsetzenden Abtriebswelle B des Planetengetriebes U verbunden ist. An beiden Enden der Abtriebswelle B sind Viskosekupplungen V angeordnet, deren Ausgänge über die Gelenkwellen 6 sowie in den Radnaben der Räder 5 angeordnete elektromagnetische Zahnkupplungen C mit den Rädern 5 antriebsmäßig verbindbar bzw. verbunden sind.

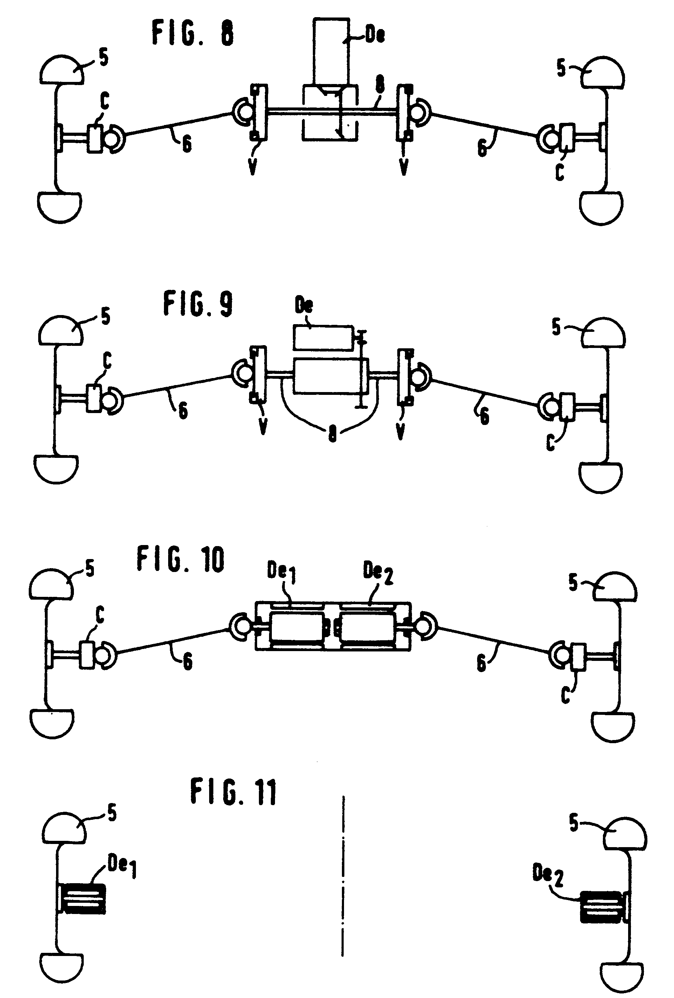

Bei der Ausführungsform nach Fig. 6 ist lediglich eine einzige Viskosekupplung V zwischen dem einen Rad 5 und der Abtriebswelle 8 angeordnet.

Bei der Ausführungsform nach Fig. 7 ist der Planetenträger unmittelbar mit dem Eingang einer Viskosekupplung V verbunden, welche zwei Ausgänge besitzt, wobei die in der Fig. 7 das rechte Rad 5 antreibende Ausgangswelle 9 die Hohlwelle 7 des Elektromotors De koaxial durchsetzt. Funktional entspricht diese Anordnung also der Anordnung nach Fig. 5.

Die Ausführungsform nach Fig. 8 entspricht funktional der Ausführungsform nach Fig. 5, jedoch treibt der hier in Fahrzeuglängsrichtung angeordnete Elektromotor De die Abtriebswelle 8 über Kegelzahnräder od.dgl. Zahnradanordnungen.

Die Ausführungsform nach Fig. 9 entspricht funktional ebenfalls der Ausführungsform nach Fig. 5, jedoch erfolgt hier der Antrieb der Abtriebswelle 8 über Stirnräder bzw. Keil- oder Zahnriemen, welche zwischen den quer eingebauten Elektromotor De und die Abtriebswelle 8 geschaltet sind.

Bei der Ausführungsform nach Fig. 10 sind zwei Elektromotoren De₁ und De2 gleichachsig nebeneinander, jedoch ohne antriebsmäßige Kopplung untereinander angeordnet. Jeder Elektromotor treibt unmittelbar eine der Gelenkwellen 6, die ihrerseits jeweils über die zwischengeschaltete elektromagnetische Zahnkupplung C die Räder 5 antreiben. Dabei sind die genannten Zahnkupplungen C wiederum bevorzugt in den Radnaben untergebracht.

Fig. 11 zeigt nochmals das Beispiel von elektrischen Radnabenmotoren De₁ und De2, welche direkt, d.h. ohne zwischengeschaltete Kupplungen, antriebsmäßig mit den jeweiligen Rädern 5 verbunden sind.

Aus den Figuren 10 und 11 ist ersichtlich, daß bei Anordnung zweier Motoren insbesondere die bei den vorangehend dargestellten Ausführungsformen angeordneten Viskosekupplungen V entfallen können und dementsprechend nur ein relativ geringer mechanischer Aufwand notwendig ist.

In den Figuren wurde immer davon ausgegangen, daß die Vorderachse als Hauptantriebsachse des Fahrzeuges angeordnet ist. Grundsätzlich ist es jedoch genau so möglich, die Hinterachse als Hauptantriebsachse anzuordnen und den Zusatzantrieb für die Vorderachse vorzusehen, wobei aufgrund der raumsparenden erfindungsgemäßen Bauweise die in den Figuren 5 bis 11 dargestellten Ausführungsformen auch bei vorne angeordnetem Motor ohne weiteres möglich sind. Dabei können der bzw. die Motoren De bzw. De₁ und De2 gegebenenfalls seitlich des Fahrzeugmotors angeordnet werden, wobei die gegebenenfalls vorhandene Abtriebswelle 8 bzw. Ausgangswelle 9 durch die Ölwanne des Fahrzeugmotors hindurchgeführt sein kann. Die entsprechende Bauweise ist auch bei Hydromotoren ohne weiteres möglich.

Die Erfindung zeichnet sich unter anderem durch die nachfolgend zusammengefaßten Vorteile aus:

Der Zusatzantrieb der Zusatzantriebsachse kann bei Schlupf der vom Fahrzeugmotor unmittelbar angetriebenen Räder automatisch zugeschaltet werden. Soweit für den Zusatzantrieb Elektromotore eingesetzt werden, kann im Stadtverkehr bei stop-and-go-Betrieb ohne Verbrennungsmotor und damit äußerst umweltfreundlich gefahren werden.

Alle dargestellten Ausführungsformen zeichnen sich durch niedrige Kosten bei der Fahrzeugherstellung bzw. geringe Investitionen für die Fahrzeugherstellung aus.

Hinsichtlich der Fahrleistungen und des Kraftstoffverbrauches müssen praktisch keinerlei Nachteile in Kauf genommen werden.

Da derZusatzantrieb beim Bremsen automatisch ausschaltet, wird für Antiblockiersysteme keinerlei zusätzlicher Regelaufwand notwendig.

Gegenüber einem herkömmlichen Allradantrieb ist eine äußerst gewichtsparende Bauweise gegeben. Im Gegensatz zu einem permanenten Allradantrieb werden die Lenkkräfte nicht erhöht.

Praktisch jedes Basisfahrzeug mit herkömmlichem Antrieb einer einzigen Achse läßt sich mit geringem Aufwand zur Anordnung des erfindungsgemäßen Zusatzantriebes modifizieren.

Der Fahrzeuginnenraum wird nicht durch vergrößerte Tunnel od.dgl., insbesondere zur Unterbringung von Verteilergetrieben, beeinträchtigt.

Bei Schubbetrieb werden die Seitenführungskräfte der zusätzlich antreibbaren Räder nicht beeinträchtigt.

Gegenüber dem Basisfahrzeug bleiben Bauhöhe und Bodenfreiheit praktisch unverändert.

Zusätzliche Geräusch- und Schwingungsprobleme treten nicht auf.

Bei Anordnung von Elektromotoren für den Zusatzantrieb kann gegebenenfalls im Schubbetrieb Energie zurückgewonnen werden.

Anstelle der Steuerung des Hydromotors Dh mittels des Steuerventiles P kann auch vorgesehen sein, einen Hydromotor mit veränderbarem Schluckvermögen anzuordnen, so daß das Verhältnis zwischen Drehzahl und dem den Motor durchsetzenden Medienstrom steuerbar ist. Zusätzlich oder alternativ kann auch eine Pumpe N mit steuerbarem Ausstoßvolumen angeordnet sein, bei der das Verhältnis zwischen Drehzahl und Medienstrom veränderbar ist.

Die zuschaltbare Antriebsachse kann auch als alleinige Antriebsachse betrieben werden. Im sogenannten "Stop-and Go-"Betrieb wird dadurch das Fahrzeug besonders umweltfreundlich, da ohne Verbrennungsmotor gefahren wird.

## Patentansprüche

1. Kraftfahrzeug mit - zumindest - einer vom Fahrzeugmotor angetriebenen Hauptantriebsachse sowie einer weiteren zuschaltbaren Antriebsachse, deren Räder antriebsmäßig mit einem vom Fahrzeugmotor gesonderten, manuell und/oder automatisch einschaltbaren Zusatzantriebsaggregat gekoppelt bzw. koppelbar sind, wobei zur Steuerung des Zusatzantriebsaggregates (De; De₁, De2; DH) und/oder von zwischen dem Zusatzantriebsaggregat und den Rädern (5) angeordneten Kupplungen (C, V) eine eingangsseitig mit den Rädern (4) der Hauptantriebsachse zugeordneten Schlupsensoren (A) verbundene elektronische Steuereinheit (B) angeordnet ist, die eingangsseitig des weiteren mit Signalgebern (H, L) verbunden ist, die bei Betätigung einer Bremse erregt werden und ein das Zusatsantriebsaggregat abschaltendes Signal und/oder ein die Kupplungen öffnendes Signal erzeugen, wobei ein manuell betätigbarer Schalter (E) für stop-and-go-Betrieb angeordnet ist, und wobei bei Betätigung dieses Schalters das Fahrzeug ausschließlich über das Zusatzantriebsaggregat sowie die zuschaltbare Antriebsachse, angetrieben wird,
dadurch gekennzeichnet, daß ein im Leerlauf des Fahrzeugmotors (1) erregter Signalgeber (F) an einen Eingang der Steuereinheit (B) angeschlossen ist und letztere bei Leerlauf die Kupplungen (C) öffnet und daß die Steuereinheit (B) die Drehzahl des Zusatzantriebsaggregates (De, Dh) vor Schließen der Kupplungen (C) an die Fahrgeschwindigkeit bzw. die Drehgeschwindigkeit der Räder (5) der Zusatzantriebsachse anpaßt und dazu eingangsseitig mit Geschwindigkeitssensoren (I) und/oder Drehzahlsensoren (K) an den Rädern (5) sowie am Zusatzantriebsaggregat verbunden ist.

2. Kraftfahrzeug nach Anspruch 1,
dadurch gekennzeichnet, daß jedem Rad (5) der zuschaltbaren Antriebsachse ein gesondertes Zusatzantriebsaggregat (Dₑ, Dₕ) zugeordnet ist.

3. Kraftfahrzeug nach Anspruch 1 oder 2, dadurch gekennzeichnet, daß als Zusatzantriebsaggregate Elektro- bzw. Hydromotoren (Dₑ bzw. Dₕ) vorgesehen sind.

4. Kraftfahrzeug nach Anspruch 1, 2 oder 3, dadurch gekennzeichnet, daß die Elektro- bzw. Hydromotoren als Radnabenmotoren angeordnet sind.

5. Kraftfahrzeug nach einem der Ansprüche 1 bis 4 dadurch gekennzeichnet, daß zwischen Elektro- bzw. Hydromotor und Rad (5) jeweils eine elektromagnetische Zahnkupplung (C) angeordnet ist.

6. Kraftfahrzeug nach einem der Ansprüche 1, 3, 4 oder 5, dadurch gekennzeichnet, daß den Rädern (5) der Zusatzantriebsachse ein gemeinsamer, vorzugsweise am gefederten Aufbau bzw. Chassis angeordneter Elektro- bzw. Hydromotor (De, Dh) zugeordnet ist, wobei zumindest ein Rad (5) dieser Achse mit dem Ausgang (7) des Elektro- bzw. Hydromotors bzw. eines demselben antriebsmäßig nachgeschalteten Getriebes mittels einer Viskosekupplung (V) verbunden ist.

7. Kraftfahrzeug nach Anspruch 6 , dadurch gekennzeichnet, daß alle Räder (5) der zuschalt baren Antriebsachse mit dem Elektro- bzw. Hydromotor mittels Viskosekupplung (V) gekoppelt sind.

8. Kraftfahrzeug nach einem der Ansprüche 6 oder 7, dadurch gekennzeichnet, daß zwischen jedem Rad (5) der zuschaltbaren Antriebsachse und dem Ausgang des Elektro- bzw. Hydromotors bzw. derViskosekupplung (V) eine weitere Kupplung (C) angeordnet ist.

9. Kraftfahrzeug nach Anspruch 8, dadurch gekennzeichnet, daß als weitere Kupplung eine elektromagnetische Zahnkupplung (C) angeordnet ist.

10. Kraftfahrzeug nach einem der Ansprüche 5, 8 oder 9, dadurch gekennzeichnet, daß die Kupplung (C) jeweils in der Radnabe angeordnet ist.

11. Kraftfahrzeug nach einem der Ansprüche 1 bis 10, dadurch gekennzeichnet, daß die etwa parallel zur Fahrzeugquerachse angeordnete Antriebswelle (8) des Zusatzantriebsaggregates an ihrem einen Ende mit dem einen Rad (5) und an ihrem anderen Ende mit dem anderen Rad (5) der zuschaltbaren Antriebsachse verbunden ist, wobei an einem der beiden Enden eine Viskosekupplung (V) angeordnet ist.

12. Kraftfahrzeug nach einem der Ansprüche 1 bis 10, dadurch gekennzeichnet, daß eine eingangsseitig mit dem Zusatzantriebsaggregat verbundene Viskosekupplung (V) zwei Ausgänge besitzt.

13. Kraftfahrzeug nach Anspruch 12, dadurch gekennzeichnet, daß der eine Ausgang der Viskosekupplung (V) koaxial innerhalb der Ausgangswelle des Zusatzantriebsaggregates angeordnet ist.

14. Kraftfahrzeug nach einem der Ansprüche 1 bis 11, dadurch gekennzeichnet, daß die Ausgangswelle des Hydro- bzw. Elektromotors als Eingangswelle eines dazu gleichachsigen Getriebes (U), insbesondere Planetengetriebes, und dessen mit den Rädern (5) antriebsmäßig kuppelbare Abtriebswelle (8) koaxial innerhalb der Ausgangswelle angeordnet ist.

## Claims

1. Motor vehicle with at least one main drive axle driven by the vehicle engine and an additional connectable drive axle whose wheels are or can be coupled for driving purposes to an auxiliary drive unit which is separate from the vehicle engine and can be switched on manually and/or automatically, wherein for control of the auxiliary drive unit (De; Deₗ; De₂; DH) and/or of clutches (C, V) disposed between the auxiliary drive unit and the wheels (5), there is fitted an electronic control unit (D) which is connected on the input side to slip sensors (A) associated with the wheels (4) of the main drive axle and which is also connected on the input side to signal transmitters (H, L) which are energised on operation of a brake and generate a signal which switches off the auxiliary drive unit and/or a signal which opens the clutches, wherein a manually operated switch (E) is fitted for stop-and-go operation, and on operation of his switch the vehicle is driven exclusively via the auxiliary drive unit and the connectable drive axle, characterised in that a signal transmitter (F) which is energised during idling of the vehicle engine (1) is connected to an input of the control unit (B), and during idling the latter opens the clutches (C) and that before closure of the clutches (C) the control unit (B) adjusts the speed of the auxiliary drive unit (De, Dh) to the driving speed or the speed of rotation of the wheels (5) of the auxiliary drive axle and for this purpose is connected on the input side to driving and speed sensors (I) and/or sensors (K) for the speed of rotation at the wheels (5) and at the auxiliary drive unit.

2. Motor vehicle according to claim 1, characterised in that each wheel (5) of the connectable drive axle is associated with a separate auxiliary drive unit (Dₑ, Dₕ).

3. Motor vehicle according to claim 1 or 2, characterised in that elctric or hydraulic motors (Dₑ or Dₕ) are provided in place of the auxiliary drive units.

4. Motor vehicle according to claim 1, 2 or 3, characterised in that the elctric or hydraulic motors are fitted as wheel hub motors.

5. Motor vehicle according to one of the claims 1 to 4, characterised in that between electric motor or hydraulic motor and wheel (5) is disposed in each case an electromagnetic jaw clutch (C).

6. Motor vehicle according to one of the claims 1, 3, 4 or 5, characterised in that associated with the wheels (5) of the auxiliary drive axle is a common electric or hydraulic motor (De, Dh) which is preferably disposed on the spring-mounted body or chassis, wherein at least one wheel (5) of this axle is connected to the output (7) of the electric or hydraulic motor or of a gearbox connected to the output thereof fordriving purposes, by means of a viscous friction clutch (V).

7. Motor vehicle according to claim 6, characterised in that all the wheels (5) of the connectable drive axle are coupled to the elctric or hydraulic motor by means of a viscous friction clutch (V).

8. Motor vehicle according to one of the claims 6 or 7, characterised in that between each wheel (5) of the connectable drive axle and the output of the electric or hydraulic motor or the viscous friction clutch (V) is fitted an additional clutch (C).

9. Motor vehicle according to claim 8, characterised in that an electromagnetic jaw clutch (C) is fitted as the additional clutch.

10. Motor vehicle according to one of the claims 5, 8 or 9, characterised in that the clutch (C) is in each case mounted in the wheel hub.

11. Motor vehicle according to one of the claims 1 to 10, characterised in that the drive shaft (8) of the auxiliary drive unit, which is arranged roughly parallel to the transverse axis of the vehicle, is connected at one end to one wheel (5) and at its other end to the other wheel (5) of the connectable drive axle, wherein at one of the two ends is disposed a viscous friction clutch (V).

12. Motor vehicle according to one of the claims 1 to 10, characterised in that a viscous friction clutch (V) connected on the input side to the auxiliary drive unit has two outputs.

13. Motor vehicle according to claim 12, characterised in that one output of the viscous friction clutch (V) is disposed coaxially within the output shaft of the auxiliary drive unit.

14. Motor vehicle according to one of the claims 1 to 11, characterised in that the output shaft of the hydraulic or electric motor is fitted as the input shaft of a coaxial gearbox (U), in particular a planetary gear mechanism, and the drive shaft (8) thereof which can be coupled to the wheels (5) for driving purposes is disposed coaxially within the output shaft.

## Revendications

1. Véhicule automobile comportant au moins un essieu d'entraînement principal actionné par le moteur du véhicule ainsi qu'un essieu d'entraînement supplémentaire susceptible d'être embrayé, dont les roues, du point de vue de l'entraînement, sont accouplées ou susceptibles d'être accouplées à un ensemble d'entraînement supplémentaire pouvant être mis en service manuellement et/ou automatiquement, séparé du moteur du véhicule, où, pour la commande de l'ensemble d'entraînement supplémentaire (De ; De₁, De₂ ; Dh) et/ou d'embrayages (C, V) montés entre l'ensemble d'entraînement supplémentaire et les roues (5), est montée une unité de commande électronique (B) qui est reliée, à l'entrée, à des détecteurs de glissement (A) associés aux roues (4) de l'essieu d'entraînement principal, unité de commande électronique qui, en plus, est reliée, à l'entrée, à des transmetteurs de signaux (H, L) qui sont activés lors de l'actionnement d'un frein et produisent un signal mettant hors service l'ensemble d'entraînement supplémentaire et/ou un signal ouvrant les embrayages, un interrupteur (E) actionnable manuellement étant monté pour le fonctionnement en freinage/accélération et, le véhicule n'étant entraîné que par l'ensemble d'entraînement supplémentaire ainsi que par l'essieu d'entraînement embrayable lors de l'actionnement de cet interrupteur, caractérisé par le fait qu'un transmetteur de signaux (F) activé lors du ralenti du moteur du véhicule (1) est relié à une entrée de l'unité de commande (B) et que cette dernière ouvre l'embrayage (C), lors du ralenti, et par le fait que l'unité de commande (B) adapte la vitesse de rotation de l'ensemble d'entraînement supplémentaire (De, Dh), avant la fermeture des embrayages (C), à la vitesse de marche ou à la vitesse de rotation des roues (5) de l'essieu d'entraînement supplémentaire et que, dans ce but, elle est reliée, à l'entrée, à des détecteurs de vitesse (I) et/ou à des détecteurs du nombre de tours (K) situés sur les roues (5) ainsi que sur l'ensemble d'entraînement supplémentaire.

2. Véhicule automobile selon la revendication 1, caractérisé par le fait qu'un ensemble d'entraînement supplémentaire (De, Dh) séparé est associé à chaque roue (5) de l'essieu d'entraînement embrayable.

3. Véhicule automobile selon la revendication 1 ou 2, caractérisé par le fait qu'il est prévu comme ensemble d'entraînement supplémentaire des moteurs électriques ou hydrauliques (De ou Dh).

4. Véhicule automobile selon la revendication 1, 2 ou 3, caractérisé par le fait que les moteurs électriques ou hydrauliques sont disposés en tant que moteurs de moyeux de roue.

5. Véhicule automobile selon l'une des revendications 1 à 4, caractérisé par le fait qu'un embrayage (C) électro-magnétique à dents est disposé à chaque fois entre le moteur électrique ou hydraulique et la roue (5).

6. Véhicule automobile selon l'une des revendications 1, 3, 4 ou 5 caractérisé par le fait qu'est associé aux roues (5) de l'essieu d'entraînement supplémentaire un moteur électrique ou hydraulique (De, Dh) commun, de préférence monté sur la carrosserie ou le châssis suspendu sur ressorts, au moins une roue (5) de cet essieu étant reliée à la sortie (7) du moteur électrique ou hydraulique ou d'un engrenage monté, du point de vue de l'entraînement, en aval dudit moteur, au moyen d'un visco coupleur (V).

7. Véhicule automobile selon la revendication 6, caractérisé par le fait que toutes les roues (5) de l'essieu d'entraînement embrayable sont accouplées au moteur électrique ou hydraulique au moyen d'un visco coupleur (V).

8. Véhicule automobile selon l'une des revendications 6 ou 7, caractérisé par le fait qu'un autre embrayage (C) est disposé entre chaque roue (5) de l'essieu d'entraînement embrayable et la sortie du moteur électrique ou hydraulique ou du visco coupleur (V).

9. Véhicule automobile selon la revendication 8, caractérisé par le fait que l'autre embrayage est un embrayage à dents électro-magnétique (C).

10. Véhicule automobile selon l'une des revendications 5, 8 ou 9 caractérisé par le fait que l'embrayage (C) est monté à chaque fois dans le moyeu de roue.

11. Véhicule automobile selon l'une des revendications 1 à 10, caractérisé par le fait que l'arbre d'entraînement (8) de l'ensemble d'entraînement supplémentaire, disposé à peu près parallèlement à l'axe transversal du véhicule, est relié, à l'une de ses extrémités, à l'une des roues (5) et, à son autre extrémité, à l'autre roue (5) de l'essieu d'entraînement embrayable, un visco coupleur (V) étant disposé à l'une des deux extrémités.

12. Véhicule automobile selon l'une des revendications 1 à 10, caractérisé par le fait qu'un visco coupleur (V) relié, à l'entrée, à l'ensemble d'entraînement supplémentaire comporte deux sorties.

13. Véhicule automobile selon la revendication 12, caractérisé par le fait qu'une sortie du visco coupleur (V) est disposée coaxialement à l'intérieur de l'arbre de sortie de l'ensemble d'entraînement supplémentaire.

14. Véhicule automobile selon l'une des revendications 1 à 11, caractérisé par le fait que l'arbre de sortie du moteur électrique ou hydraulique est disposé comme arbre d'entrée d'un engrenage (U) de même axe, en particulier d'un engrenage planétaire, dont l'arbre d'entraînement (8) embrayable pour l'entraînement avec les roues (5) est disposé coaxialement à l'intérieur de l'arbre de sortie.
